# FASCICULE DE BREVET EUROPEEN

(11) **EP 2 516 565 B1**
(45) Date de publication et mention de la délivrance du brevet: **15.02.2017**
(21) Numéro de dépôt: 10810776.4
(22) Date de dépôt: 21.12.2010
(51) Int. Cl.: C09D 127/06

(54) **ENCRE DESTINEE A L'IMPRESSION DE PIECES MOULEES ET PROCEDE DE MISE EN UVRE**
TINTE ZUM DRUCKEN AUF FORMTEILEN UND VERFAHREN ZUR VERWENDUNG DIESER TINTE
INK FOR PRINTING ON MOLDED PARTS, AND METHOD FOR USING SAID INK

(30) Priorité: 22.12.2009 FR 0959409
(43) Date de publication de la demande: 31.10.2012
(73) Titulaire: Kem One, 69008 Lyon (FR)
(72) Inventeur: MAILLOT, René, F-51140 Jonchery Sur Vesle (FR); PERRAUD, Eric, F-95800 Courdimanche (FR); CHABROL, Anne, F-69003 Lyon (FR); CUNY, Christophe, F-51140 Jonchery Sur Vesle (FR)
(74) Mandataire: Lavoix
(86) Numéro de dépôt international: PCT/FR2010/052851
(87) Numéro de publication internationale: WO 2011/086287

(56) Documents cités:
- FR-A1- 2 750 639

## Description

La présente invention concerne une composition d'encre destinée à être mise en oeuvre dans un procédé d'obtention d'une pièce ou d'un objet moulé à base de résine thermoplastique plastifiée, présentant une surface imprimée de grande qualité. La présente invention concerne également les objets moulés ainsi obtenus.

Dans le domaine automobile, la préparation de couches ou peaux composites à base de résine thermoplastique présentant une partie colorée est connue. Ces peaux composites sont utilisées pour les parties les plus visibles des habitacles des véhicules automobiles, tels qu'en particulier les planches de bord, les consoles centrales et les habillages de porte. La présence d'une partie colorée permettant d'obtenir des effets visuels les plus variés, tel qu'une imitation du cuir.

Pour obtenir une surface présentant une partie colorée sur les peaux composites, Il existe en particulier deux procédés. Le premier procédé « in mold painting » ou « in mold pigmentation » (IMP)(peinture dans le moule), décrit dans le document EP 0912 312 de la demanderesse comprend les étapes suivantes :
- dépose sur la surface d'un moule d'une composition A, colorée, comprenant au moins un plastifiant et éventuellement un ou plusieurs agents modifiants, tels que des pigments de coloration, des paillettes décoratives ou une résine thermoplastique du type PVC,
- dépose ensuite d'une composition B comprenant une résine thermoplastique telle que du PVC,
- chauffage du moule.

Le deuxième procédé, appelé « In Mold Coating » (IMC) (enduction dans le moule), est décrit dans son principe dans le document WO 2004/060627, ainsi que dans la demande US 6 656 596 ; ce document décrit l'obtention d'un panneau pour intérieur d'automobile, ayant une structure multicouches obtenue par dépose dans un moule successivement d'un revêtement comprenant une dispersion aqueuse ou dans un solvant d'un polyuréthane, d'un colorant et d'un agent de réticulation, et d'une couche contenant du polychlorure de vinyle (PVC) et au moins un plastifiant.

Les procédés décrits ci-dessus ne permettent malheureusement pas d'obtenir des objets de qualité optimale, notamment lorsque l'on cherche à réaliser des motifs colorés fins ou des formes colorées très découpées. En effet, les compositions colorées mises en oeuvre dans les procédés définis ci-dessus, de par leur propriétés rhéologiques notamment, ne peuvent être projetées sur un support qu'en utilisant des pistolets à peinture. Le diamètre de l'orifice à travers lequel sont projetées les compositions colorées étant important dans le cas d'un pistolet à peinture, la précision d'impression est réduite et il est difficile de créer certains motifs tels que des lignes fines, et en particulier des pointillés.

Il existe donc un besoin pour une nouvelle formulation d'encre permettant l'obtention objets moulés, à base de résine thermoplastique plastifiée, présentant une surface imprimée de grande qualité.

Ainsi, l'invention concerne une composition comprenant, en poids par rapport au poids total de la composition :
- 5 à 20%, et de préférence 10 à 15% d'au moins une résine thermoplastique dont les particules ont une taille comprise entre 0,1 et 10 µm,
- 1 à 20 %, et de préférence 5 à 15% d'au moins un agent modifiant,
- 5 à 20%, et de préférence 10 à 15% d'au moins un plastifiant, et
- 45 à 75%, et de préférence 50 à 70% d'au moins un solvant organique.

A titre de préambule, on notera que l'expression « compris entre » ou « comprise entre » doit être interprétée, dans la présente description, comme incluant les bornes citées.

La composition ci-dessus présente une viscosité comprise de préférence entre 5 et 40 mPa.s et de manière encore plus préférée comprise entre 10 et 25 mPa.s à 20°c, mesurée avec un viscosimètre de type BROOKFIELD®.

Les inventeurs ont montré dans l'exemple 3, qu'une encre dont la composition est donnée ci-dessus peut être projetée à travers des buses d'impression de faible diamètre, et par exemple d'un diamètre de 40µm, et même d'un diamètre de 30 µm ou 20 µm en vue de l'obtention d'une surface imprimée de grande qualité. Il est ainsi possible d'obtenir une impression en 360 ou en 720 dpi en un ou deux passages de la tête d'impression sur un support.

De préférence, le ratio en poids de la résine thermoplastique au plastifiant est compris entre 1:0,1 et 1:2, et de préférence compris entre 1:0,5 et 1:1. Ce ratio permet d'obtenir une résine particulièrement résistante à l'abrasion.

La ou les résines thermoplastiques peuvent être choisies parmi le polychlorure de vinyle, le polychlorure de vinyle chloré (CPVC), les copolymères de chlorure de vinyle par exemple les copolymères de chlorure de vinyle et d'acétate de vinyle, le polyfluorure de vinylidène, les polyamides tels que le polyamide 11 et le polyamide 12, le polyéthylène haute densité et le polymethacrylate de méthyle, et leurs mélanges.

Avantageusement, on choisit le polychlorure de vinyle et le polyméthacrylate de méthyle et les copolymères de chlorure de vinyle et d'acétate de vinyle.

De préférence, la résine thermoplastique est une résine polychlorure de vinyle (ou PVC) pouvant être obtenue par un procédé en émulsion, en suspension ou en microsuspension. On peut citer à titre d'exemple la résine commercialisée sous la dénomination Pevikon® P1510 par la société INEOS.

Au sens de la présente invention, on entend par agent modifiant, tout composé susceptible de modifier l'aspect visuel des objets moulés, et notamment les pigments, les paillettes décoratives et les nacres.

Le ou les pigments utilisés peuvent être aussi bien organiques, que minéraux. On peut citer à titre d'exemple, les oxydes métalliques, enrobés ou non, comme par exemple des oxydes de titane (amorphe ou cristallisé sous forme rutile et/ou anatase), de fer, de zinc, de zirconium ou de cérium et leurs mélanges.

On peut citer notamment le pigment jaune commercialisé par la société CIBA sous la dénomination Jaune cromophtal® PV H3R, le dioxyde de titane commercialisé par la société kronos sous la dénomination KRONOS® 2220, le pigment bleu commercialisé par la société CIBA sous la dénomination cromophtal® 4GNP et leurs mélanges.

Les paillettes sont utilisées en général pour rendre l'objet plus esthétique. La teneur en paillettes dans l'objet fabriqué est généralement comprise entre environ 5 et environ 50 g/cm². On utilise de préférence les paillettes à base d'oxyde de titane recouvertes de mica.

Le pigment mis en oeuvre dans la composition objet de l'invention peut se présenter sous forme de pâte pigmentaire, comprenant un mélange de pigment et de solvant ou un mélange de pigment et de plastifiant, éventuellement en mélange avec un agent dispersant.

Le plastifiant mis en oeuvre dans la composition objet de l'invention est un plastifiant compatible avec la résine thermoplastique. Le plastifiant peut être choisi parmi les esters formés à partir d'alcool et d'acide organique tel que l'acide trimellitique, l'acide sébacique, adipique, phtalique, citrique, benzoïque, tallique, glutarique, fumarique, maléique, oléique, palmitique et acétique. Notamment le plastifiant peut être choisi parmi le trimellitate d'octyle, le dioctyl phtalate, le nonyl undecyl phtalate, le dioctyl adipate, le phosphate de tricresyle, le triméthyl pentanyl diisobutyrate, et leurs mélanges.

Le plus souvent, on utilise les phtalates et les trimellitates en particulier le trimellitate d'octyle.

On peut citer à titre d'exemple les produits commercialisés par la société POLYNT sous les dénomination Diplast® TM/ST, et Diplast® TM79 les produits commercialisés par la société ADEKA PALMAROLE, sous la dénomination CIZER® C8L, et les produits commercialisés par la société EASTMAN sous la dénomination TXIB®.

Des mélanges de ces produits peuvent être utilisés en tant que plastifiant.

Le solvant organique mis en oeuvre dans la composition objet de l'invention est un solvant dont la température d'ébullition est de préférence au moins égale à 200°C. L'utilisation d'un tel solvant permet d'éviter une vaporisation trop rapide au moment de l'application de la composition objet de l'invention sur une pièce moulée, et d'éviter ainsi que des opérateurs ne soient en contact avec des composés organiques volatils.

De préférence, le solvant organique est choisi parmi l'isophorone, l'acétate de pentyle, les lactate d'alkyle, en particulier le lactate d'éthyle, les esters dibasiques des acides adipique, glutarique et succinique, et leurs mélanges, en particulier les mélanges d'adipate de diméthyle, de glutarate de diméthyle et de succinate de diméthyle.

A titre d'exemple de solvant on peut citer le produit commercialisé par la société EXXONMOBIL sous la dénomination commerciale EXXSOL D140®.

Afin de faire varier la viscosité dans les plages définies ci-dessus, un additif de rhéologie peut être ajouté. En particulier, il peut être nécessaire d'abaisser la viscosité de la composition objet de l'invention en utilisant un abaisseur de viscosité. Il peut s'agir d'un diluant volatile, d'un émulsifiant ou d'un colloïde protecteur. Les diluants peuvent en particulier inclure des hydrocarbures à faible point d'ébullition tel que les hydrocarbures en C10-C16. Les émulsifiants incluent des sels ou esters d'acides gras, des condensats d'oxyde d'éthylène avec avec des phényls alkyles, ou ds alcools gras, de l'octoate de zinc/magnésium. Les colloïdes protecteurs sont par exemple les lécithines. La quantité d'additif de rhéologie ajoutée dans la composition objet de l'invention est en général de 5 à 100 parties en poids, pour 100 parties en poids de résine thermoplastique.

A titre d'exemple d'additif de rhéologie, on peut citer les esters d'acides carboxyliques commercialisés sous la dénomination commerciale VISCOBYK 5100® par la société BYK CHEMIE GmbH.

La composition objet de l'invention peut comprendre en outre un ou plusieurs additifs d'additifs, choisis parmi des charges, des stabilisants, des anti-oxydants, des additifs de mise en oeuvre, des lubrifiants ou des agents ignifugeants. En particulier, parmi les additifs communément utilisés dans des compositions à base de résine vinylique, on peut citer des sels métalliques d'acide carboxylique organique, des acides phosphorique organique, des zéolites, des hydrotalcites, des composés époxidés, des béta-dicétones, des alcools polyhydriques, des antioxydants phosphorés, soufrés ou phénolique, des absorbeurs ultraviolet par exemple des benzophenones, benzotriazoles, et dérivés d'oxanilide, des cyanoacrylates, des stabilisants lumière à amine encombrées ou « HALS » pour « hindered amine light stabilizer », des stabilisants à alcoxyamine encombrée ou « NOR HALS » pour « Alkoxyamine hindered amine light stabilizer », notamment les produits commercialisés par Clariant sous la dénomination Hostavin Now®, des sels d'acide perchlorique, et d'autres composés inorganiques à base de métaux, des lubrifiants par exemple des cires organiques, des alcools gras, des acides gras, des esters, des sels métalliques, des charges par exemple de la craie ou du talc, des agents d'expansion par exemple des azodicarbonamides.

Comme indiqué plus haut la composition objet de l'invention est destinée à être mise en oeuvre dans un procédé d'obtention d'un objet moulé.

L'invention a donc également pour objet un objet moulé comprenant une composition telle que définie ci-dessus. Par objet moulé, on entend au sens de la présente invention objet obtenu à partir d'un moule. A titre d'exemple ledit objet peut être choisi parmi une pièce de tableau de bord de véhicule, un article de maroquinerie, ou une selle.

Les objets moulés comprenant une composition telle que définie ci-dessus peuvent être destinés à tous les domaines dans lesquels on cherche à réaliser des objets moulés, en particulier des objets moulés imitant le cuir, et notamment peuvent être destinés à la fabrication de pièce pour l'habitacle d'un véhicule automobile, de préférence les contre-portes, la console centrale et les reposes-bras, un article de maroquinerie, de préférence un sac à main, un sac de voyage et une selle.

L'invention a également pour objet un procédé d'obtention d'un objet moulé présentant une surface imprimée, ledit procédé comprenant les étapes successives suivantes :
(i) dépôt d'une couche de composition (A) telle que définie ci-dessus sur un moule,
(ii) chauffage du moule jusqu'à gélification de la composition (A),
(iii) dépôt sur le moule partiellement ou totalement revêtu obtenu en (ii), d'une couche de composition (B) comprenant une résine thermoplastique ou un mélange de résine thermoplastique, et
(iv) chauffage du moule jusqu'à gélification de la composition (B).

De préférence, au cours de l'étape (i), des buses d'impression d'un diamètre inférieur ou égal à 40µm, et de préférence d'un diamètre de 30 µm ou 20 µm sont mises en oeuvre pour déposer la couche de composition (A).

On peut citer à titre d'exemple l'utilisation de buse d'impression Omnidot® 760 GS8 de la société XAAR, Cambridge, Royaume-Uni.

Pendant l'étape (ii), la température du moule augmente progressivement, cette augmentation progressive de la température permettant la gélification de la composition (A).

On entend par augmentation progressive de la température, une vitesse de chauffe au plus égale à 40°C par minute.

La température de gélification est en général comprise entre 150°C et environ 300°C. Elle est choisie en fonction de la nature de la résine thermoplastique à transformer.

Ainsi, de préférence, la composition (A) mise en oeuvre au cours de l'étape (i) comprend une résine de polychlorure de vinyle, et au cours de l'étape (ii) le moule est chauffé jusqu'à une température comprise entre 180°C et 260°C, et de préférence, entre 230°C et 300°C.

Ainsi, de préférence, au cours de l'étape (ii) la température du moule partiellement ou totalement revêtu de la composition (A) passe d'environ 40°C à environ 240°C, et la composition (A) est gélifiée pendant cette montée en température.

La composition (B) comprend une résine thermoplastique de préférence choisie parmi le polychlorure de vinyle (PVC) ou un mélange de PVC et d'un polymère compatible choisi parmi les copolymères ou terpolymères chlorure de vinyle et acétate de vinyle (VC/VA) ou chlorure de vinyle et dérivé acrylique (VC/DA), les polyuréthanes thermoplastiques (TPU), les polyétheresters thermoplastiques, les copolymères éthylène/monomère vinyilique (EVA), les terpolymères éthylène/ monomère vinylique/carbonyle, les élastomères acryliques processables à l'état fondu, les copolymères à blocs polyamide et à blocs polyéther ou polyétherblockamides, les polyéthylènes chlorés ou chlorosulfonés, les polymères éthylène/(méth)acrylate d'alkyle ou acide (méth)acrylique fonctionnalisés ou non, les polymères core-shell type MBS, les terpolymères bloc SBM, le PVDF et les résines polyamides en poudre. Selon un mode de réalisation préféré de l'invention, la résine thermoplastique utilisée est un polychlorure de vinyle (PVC) de Kwert compris entre 50 et 80.

Selon un mode de réalisation, la résine thermoplastique de la composition (B) est du polychlorure de vinyle (PVC) obtenu par un procédé en suspension ou en micro-suspension, mais du PVC fabriqué en émulsion ou en masse peut aussi être utilisé. Un exemple de copolymère VC/VA est Lacovyl® de Arkema, un exemple de copolymère VC/DA est Vinnolit® de Vinnolit, un exemple de TPU est Estane® de Goodrich, un exemple de polyétherester thermoplastique est Hytrel® de DuPont, un exemple de polyétherblockamide est Pebax® de Arkema, un exemple d'EVA est Evatane® d' Arkema, un exemple de terpolymère éthylène/ monomère vinylique/carbonyle est Elvaloy® de DuPont, des exemples de polymères éthylène/(méth)acrylate d'alkyle ou acide (méth)acrylique fonctionnalisés ou non sont Lotryl®, Lotader® et Orevac® de Arkema, un exemple de polyéthylènes chlorés ou chlorosulfonés est Tyrin® de DuPont, un exemple d'élastomère acrylique processable à l'état fondu est Alcryn® de Apa, un exemple de résines polyamides en poudre est Orgasol® de Arkema. Ces polymères compatibles avec le PVC, dits " alliés ", présentent de bonnes propriétés à froid, et sont susceptibles de conférer une fragilité appropriée aux couches les renfermant.

La composition (B) peut ainsi comprendre des mélanges de résines thermoplastiques comprennent des résines PVC et des copolymères ou terpolymères chlorure de vinyle et acétate de vinyle (VC/VA) ou chlorure de vinyle et dérivé acrylique (VC/DA), ainsi que des résines PVC et des polyuréthanes thermoplastiques (TPU). Ces différentes résines peuvent être mélangées entre elles dans de larges proportions.

La composition (B) peut également comprendre un plastifiant ou un mélange de plastifiant tel que défini ci-dessus. Le ratio en poids de la résine thermoplastique au plastifiant dans la composition (B) est alors compris entre 1:0,1 et 1:2, et de préférence compris entre 1:0,5 et 1:1. Ce ratio permet d'obtenir une résine particulièrement résistante à l'abrasion.

Au cours de l'étape (iii) la composition (B), de préférence sous forme de poudre peut être déposée sur le moule suivant les techniques usuelles de moulage comme le pistolage, le rotomoulage, le "slush-moulding" ou embouage.

Le pistolage consiste en un dépôt d'une poudre sur le moule fondé sur un effet électrostatique. Le rotomoulage consiste à appliquer une quantité strictement nécessaire de poudre dans le moule tout en appliquant des mouvements de rotation du moule, ce qui permet à la poudre de se déposer sur la surface du moule. Lorsque l'on introduit dans le moule une quantité de poudre supérieure à celle nécessaire pour le dépôt par rotation, la quantité excédentaire après dépôt de la poudre sur le moule peut être éliminée par gravité. Cette technique est connue sous le nom de "slush-moulding" ou embouage. Cette dernière technique de dépôt est particulièrement préférée. En "slush-moulding", la composition (B), sous forme de poudre est déposée sur le moule totalement ou partiellement revêtu de la composition (A) par rotation de l'ensemble du dispositif qui comprend le moule ainsi que le réservoir permettant de déposer la composition (B). Le nombre de rotations du dispositif est choisi en fonction de l'épaisseur de la couche de composition (B) souhaitée.

En général, la composition (B) est déposée sur le moule à la température de gélification de la composition (A). La composition (B) avantageusement sous forme de poudre est donc versée ou appliquée sur le moule à une température comprise entre 150°C et 300°C, de préférence entre 180°C et 260°C, et de manière tout à fait préférée entre 230°C et 250°C. Au cours de l'application de la composition (B) sur le moule, la température du moule peut diminuer jusqu'à une température comprise entre 130° et 190°C.

Pour que la couche de composition (B) adhère correctement au moule partiellement ou totalement revêtu de composition (A), la température d'application de la composition (B), dite température de poudrage doit être comprise dans les gammes définies ci-dessus. En effet, lors de l'étape (iii), les premiers grains de composition (B) qui tombent sur le moule, doivent gélifier rapidement et coller au moule. Les grains suivants se collent aux premiers et gélifient également en mêlant leurs chaînes PVC à celles des grains environnants (interpénétrations des chaînes PVC).

Si la température est trop faible, les premiers grains ne peuvent pas commencer à gélifier donc ne vont pas coller à la coquille. Les grains de résine PVC ne vont pas coller entre eux : on obtiendrait une structure poreuse mal gélifiée.

Au cours de l'étape (iv), le moule est chauffé jusqu'à gélification de la composition (B), c'est à dire de préférence jusqu'à une température comprise entre 150°C et 300°C. Elle est choisie en fonction de la nature de la résine thermoplastique à transformer. Ainsi pour les polychlorure de vinyle elle est avantageusement comprise entre 180°C et 260°C, et de préférence, entre 230°C et 250°C.

A la température de gélification, on peut soit réaliser à nouveau, une ou plusieurs fois les étapes (III) et (IV) soit attendre la gélification totale de la résine thermoplastique avant de refroidir le moule, par exemple en plongeant celui-ci dans de l'eau à température ambiante.

Tout type de moule permettant un chauffage progressif en présence d'une résine thermoplastique peut convenir pour le procédé selon la présente invention. Avantageusement, on utilise les moules à double-enveloppe avec circulation d'un fluide caloporteur.

Les étapes (i) et (ii) peuvent être séparées dans le temps et dans l'espace, de sorte que l'étape (i) peut avoir lieu sur un site de production différent de celui sur lequel on effectue l'étape (ii).

Le procédé selon la présente invention peut être mis en oeuvre dans le domaine de la décoration et de la pigmentation avec une économie d'ingrédients. Il permet également d'améliorer le toucher de la surface des objets ainsi fabriqués. De plus il permet d'améliorer l'adhérence entre deux couches à base de résine thermoplastique de nature différente.

L'invention sera mieux comprise à l'aide des exemples suivants.

### Exemple 1 : Formulation blanche pour impression

Une composition selon l'invention (encre blanche) est préparée en mélangeant les divers constituants présentés dans le tableau 1 ci-dessous, selon les techniques connues de l'homme du métier dans la formulation et préparation des encres.

On mélange tout d'abord le plastifiant, le stabilisant, l'abaisseur de viscosité et les solvants pendant 5-10 min à 1000 tr/min à l'aide d'un disperseur.

La résine PVC est alors introduite progressivement dans le mélange, le temps d'introduction est compris entre 2 et 5 minutes à 500 tr/min.

Il est souvent observé un échauffement du mélange en raison des contraintes de cisaillement. Le mélange est donc préférentiellement préparé dans un mélangeur dont la température est contrôlée.( T= 23°C). Pour contrôler la température, il est également possible de faire varier la vitesse d'agitation dans le disperseur.

L'abaisseur de viscosité est introduit avant la résine PVC pour obtenir un effet de réduction de la viscosité marqué. L'abaisseur de viscosité pourrait également être introduit en toute fin du procédé de fabrication de l'encre, avec un temps d'introduction de 10 minutes, sous agitation à 500tr/min, mais l'effet de réduction de viscosité serait moindre.

Le stabilisant aurait pu être introduit en toute fin du procédé de fabrication de l'encre, avec un temps d'introduction de 5 minutes, sous agitation à 500tr/min.

On obtient une dispersion de résine.

Les solvants peuvent également être introduits avant et/ou après la résine ou partiellement introduit avant et après.

Le pigment blanc est alors introduit dans le mélange sous forme de poudre, avec un temps d'introduction de 30 minutes, sous agitation à 500 tr/min.

**Tableau 1 composition selon l'invention (encre blanche)**

| Base blanche pour encre PVC | | Quantité (en g) |
|---|---|---|
| Résine PVC | Pevikon® P1510 (INEOS) | 15 |
| Plastifiant | Trimellitate Diplast® TM79 (POLYNT) | 9 |
| Solvants | Isophorone (BRENTAG) | 20 |
| | Pentyl acétate (BRENNTAG) | 22 |
| | Exxsol® D140 (EXXXONMOBIL) | 21 |
| Agent de contrôle de la viscosité | Viscobyk® 5100 (BYK CHEMIE) | 5 |
| Stabilisant thermique | Lastab® 375 T (LAGOR) | 0,5 |
| Oxyde de titane : TiO₂ | SACHTELEBEN RDI-S® (SACHTELEBEN) | 7,5 |

### Exemple 2 : Mesure de la viscosité de type BROOKFIELD® et de la taille de particule.

Pour une application jet d'encre la viscosité mesurée à 20°C à l'aide d'un viscosimètre brookfield doit être inférieure à 30 mPa.S et de préférence inférieure à 20 mPa.s.

La viscosité de la composition de l'exemple 1 a été mesurée à 23°C à l'aide d'un viscosimètre BROOKFIELD DV-II+ pro® à 60 tr/min. La viscosité est de 11,1 mPa.s.

La taille des particules présentes dans la composition de l'exemple 1 a été mesurée. Les particules présentent un diamètre inférieur à 2µm.

### Exemple 3 : Essai d'impression (étape (i) du procédé objet de l'invention.)

La composition selon l'invention (exemple 1) est imprimée sur un moule avec l'utilisation d'une imprimante jet d'encre piézoélectrique équipée d'une tête d'impression Xaar Omnidot® 760 GS8. (de la société Xaar, Cambridge, Royaume-Uni).

Les types d'impression réalisées sont les suivantes :
- **essai 1 :** un motif prédéfini est imprimé sur un moule, en un seul passage à 360 dpi, on obtient un motif imprimé, présentant une bonne résolution, c'est à dire un contour de motif très net, mais dont l'opacité pourrait être plus importante.
- **essai 2 :** un motif prédéfini est imprimé sur un moule, en deux passages à 360 dpi. L'épaisseur d'encre déposée est plus importante que pour l'essai 1, le motif obtenu est donc plus opaque que pour l'essai 1, et le contour du motif est un peu moins net.
- **essai 3 :** un motif prédéfini est imprimé sur un moule, en un seul passage à 720 dpi. Le motif obtenu est plus opaque que pour l'essai 1, et le contour du motif est très net. La qualité de l'impression est encore meilleure que pour les essais 1 et 2.

### Exemple 4 : Essai d'impression (étape (ii) à (iv) du procédé objet de l'invention.)

Le moule préalablement imprimé de l'essai 3 est utilisé pour réaliser le procédé de « slush-moulding » ou embouage.

Dans un four à air chaud, T= 295°C, le moule est mis en chauffe pendant 4 min.

Apres les 4 minutes de chauffe, le moule est sorti du four et de la poudre PVC plastifiée est répandue sur la surface. La température du moule est alors de 210°C.

Le moule est alors manipulé de façon à assurer une répartition homogène de la poudre sur la surface.

20 secondes après le versement de la poudre sur le moule, l'excès de poudre non gélifiée est retiré par un retournement du moule. Le moule est alors tapissé d'une couche de poudre PVC plastifiée en cours de gélification, il est réintroduit dans le four pour 70 secondes de chauffe.

Apres cette étape de gélification de la poudre PVC plastifiée, le moule est sorti du four et plongé dans un réservoir d'eau froide (T=23°C) pendant 90 secondes.

Le moule est ensuite séché par pulvérisation d'air comprimé et la peau ainsi réalisée démoulée.

On obtient une peau PVC plastifiée qui présente un motif imprimé.

### Exemple 5 : Essai de juxtaposition de couleurs

Une encre rouge est utilisée dans cet exemple. Sa composition est similaire à la formulation donnée dans l'exemple 1, mais le pigment d'oxyde de titane est remplacé par 2% de pigment Rouge numéro 214 commercialisé sous la dénomination « Fast Red BNP » par la société Clariant.

L'essai d'impression de l'exemple 3 est alors répété en juxtaposant une deuxième tête d'impression alimentée par l'encre rouge à coté de la précédente tête d'impression alimentée par l'encre blanche.

Un motif bicolore prédéfini est alors imprimé sur un moule, en un seul passage à une définition de 360 dpi.

Une peau PVC est ensuite réalisée en répétant le mode opératoire décrit dans l'exemple 4.

Le motif rouge et blanc imprimé présente une bonne opacité. La qualité de d'impression des deux encres est bonne avec un excellent contraste obtenu par une nette séparation à l'interface des motifs des deux couleurs.

## Revendications

1. Composition comprenant, en poids par rapport au poids total de la composition :
- 5 à 20%, et de préférence 10 à 15% d'au moins une résine thermoplastique dont les particules ont une taille comprise entre 0,1 et 10 µm,
- 1 à 20 %, et de préférence 5 à 15% d'au moins un agent modifiant,
- 5 à 20%, et de préférence 10 à 15% d'au moins un plastifiant, et
- 45 à 75%, et de préférence 50 à 70% d'au moins un solvant organique.

2. Composition selon la revendication 1, **caractérisée en ce qu'**elle présente une viscosité comprise entre 5 et 40 mPa.s et de préférence comprise entre 10 et 25 mPa.s à 20°C.

3. Composition selon la revendication 1 ou 2, **caractérisée en ce que** le ratio en poids de la résine thermoplastique au plastifiant est compris entre 1:0,1 et 1:2, et de préférence compris entre 1:0,5 et 1:1.

4. Composition selon l'une quelconque des revendications 1 à 3, **caractérisée en ce que** la résine thermoplastique est une résine polychlorure de vinyle.

5. Composition selon l'une quelconque des revendications 1 à 4, **caractérisée en ce que** le solvant est choisi parmi l'isophorone, l'acétate de pentyle, les lactates d'alkyle et de préférence le lactate d'éthyle, les esters dibasiques des acides adipique, glutarique et succinique, et leurs mélanges.

6. Objet moulé comprenant une composition selon l'une quelconque des revendications 1 à 5.

7. Objet selon la revendication 6, **caractérisé en ce qu'**il est choisi parmi une pièce pour l'habitacle d'un véhicule automobile, de préférence les contre-portes, la console centrale et les reposes-bras, un article de maroquinerie, de préférence un sac à main, un sac de voyage et une selle.

8. Procédé d'obtention d'un objet moulé présentant une surface imprimée, ledit procédé comprenant les étapes successives suivantes :
(i) dépôt d'une couche de composition (A) telle que définie selon l'une quelconque des revendications 1 à 5 sur un moule,
(ii) chauffage du moule jusqu'à gélification de la composition (A),
(iii) dépôt sur le moule partiellement ou totalement revêtu obtenu en (ii), d'une couche de composition (B) comprenant une résine thermoplastique ou un mélange de résine thermoplastique, et
(iv) chauffage du moule jusqu'à gélification de la composition B.

9. Procédé selon la revendication 8, **caractérisé en ce que**, au cours de l'étape (i), des buses d'impression d'un diamètre inférieur ou égal à 40µm, et de préférence d'un diamètre de 30 µm ou 20 µm sont mises en oeuvre pour déposer la couche de composition (A).

10. Procédé selon la revendication 8 ou 9, **caractérisé en ce que**, la composition (A) mise en oeuvre au cours de l'étape (i) comprend une résine polychlorure de vinyle, et au cours de l'étape (ii) le moule est chauffé jusqu'à une température comprise entre 180°C et 260°C, et de préférence, entre 230°C et 300°C.

## Patentansprüche

1. Zusammensetzung, umfassend in Gewichtprozenten in Bezug auf das Gesamtgewicht der Zusammensetzung:
- 5 bis 20% und vorzugsweise 10 bis 15% mindestens eines thermoplastischen Harzes, dessen Partikel eine Größe zwischen 0,1 und 10 µm aufweisen,
- 1 bis 20% und vorzugsweise 5 bis 15% mindestens eines Modifiziermittels,
- 5 bis 20% und vorzugsweise 10 bis 15% mindestens eines Weichmachers, und
- 45 bis 75% und vorzugsweise 50 bis 70% mindestens eines organischen Lösungsmittels.

2. Zusammensetzung nach Anspruch 1, **dadurch gekennzeichnet, dass** sie eine Viskosität zwischen 5 und 40 mPa·s und vorzugsweise zwischen 10 und 25 mPa·s bei 20°C aufweist.

3. Zusammensetzung nach Anspruch 1 oder 2, **dadurch gekennzeichnet, dass** das Gewichtsverhältnis des thermoplastischen Harzes zu dem Weichmacher zwischen 1:0,1 und 1:2 und vorzugsweise zwischen 1:0,5 und 1:1 liegt.

4. Zusammensetzung nach einem beliebigen der Ansprüche 1 bis 3, **dadurch gekennzeichnet, dass** das thermoplastische Harz ein Polyvinylchloridharz ist.

5. Zusammensetzung nach einem beliebigen der Ansprüche 1 bis 4, **dadurch gekennzeichnet, dass** das Lösungsmittel ausgewählt ist aus Isophoron, Pentylacetat, Alkyllaktaten und vorzugsweise Ethyllaktat, basischen Estern der Adipinsäure, Glutarsäure und Bernsteinsäure und ihrer Mischungen.

6. Geformter Gegenstand, eine Zusammensetzung nach einem beliebigen der Ansprüche 1 bis 5 umfassend.

7. Gegenstand nach Anspruch 6, **dadurch gekennzeichnet, dass** er ausgewählt ist aus einem Teil für den Innenraum eines Kraftfahrzeugs, vorzugsweise den Türverkleidungen, der Mittelkonsole und den Armstützen, einem Lederwarenartikel, vorzugsweise einer Handtasche, einer Reisetasche und einem Sattel.

8. Verfahren zum Erlangen eines geformten Gegenstands, der eine bedruckte Oberfläche aufweist, wobei das Verfahren die folgenden aufeinanderfolgenden Schritte aufweist:
(i) Aufbringen einer Schicht der Zusammensetzung (A), wie sie nach einem beliebigen der Ansprüche 1 bis 5 definiert ist, auf eine Form,
(ii) Aufheizen der Form bis zur Gelierung der Zusammensetzung (A),
(iii) Aufbringen einer Schicht der Zusammensetzung (B), die ein thermoplastisches Harz oder eine thermoplastische Harzmischung umfasst, auf die teilweise oder vollständig beschichtete und in Schritt (ii) erhaltene Form und
(iv) Aufheizen der Form bis zur Gelierung der Zusammensetzung (B).

9. Verfahren nach Anspruch 8, **dadurch gekennzeichnet, dass** während des Schritts (i) Druckdüsen eines Durchmesser kleiner oder gleich 40 µm und vorzugsweise eines Durchmessers von 30 µm oder 20 µm betätigt werden, um die Schicht der Zusammensetzung (A) abzuscheiden.

10. Verfahren nach Anspruch 8 oder 9, **dadurch gekennzeichnet, dass** die während des Schritts (i) ausgeführte Zusammensetzung (A) ein Polyvinylchloridharz umfasst und während des Schritts (ii) die Form bis zu einer Temperatur zwischen 180°C und 260°C, vorzugsweise zwischen 230°C und 300°C aufgeheizt wird.

## Claims

1. A composition comprising, on a weight basis relative to the total weight of the composition:
- 5% to 20% and preferably 10% to 15% of at least one thermoplastic resin whose particles have a size of between 0.1 and 10 µm,
- 1% to 20% and preferably 5% to 15% of at least one modifier,
- 5% to 20% and preferably 10% to 15% of at least one plasticizer, and
- 45% to 75% and preferably 50% to 70% of at least one organic solvent.

2. The composition as claimed in claim 1, **characterized in that** it has a viscosity of between 5 and 40 mPa.s and preferably of between 10 and 25 mPa.s at 20°C.

3. The composition as claimed in claim 1 or 2, **characterized in that** the weight ratio of the thermoplastic resin to the plasticizer is between 1:0.1 and 1:2 and preferably between 1:0.5 and 1:1.

4. The composition as claimed in any one of claims 1 to 3, **characterized in that** the thermoplastic resin is a polyvinyl chloride resin.

5. The composition as claimed in any one of claims 1 to 4, **characterized in that** the solvent is chosen from isophorone, pentyl acetate, alkyl lactates and preferably ethyl lactate, dibasic esters of adipic, glutaric and succinic acids, and mixtures thereof.

6. A molded object comprising a composition as claimed in any one of claims 1 to 5.

7. The object as claimed in claim 6, **characterized in that** it is chosen from a part for the interior of a motor vehicle, preferably the inner doors, the central console and the armrests, a leathercraft article, preferably a handbag, a traveling bag and a saddle.

8. A process for obtaining a molded object having a printed surface, said process comprising the following successive steps:
(i) deposition of a coat of composition (A) as defined according to any one of claims 1 to 5 onto a mold,
(ii) heating of the mold to the point of gelling of composition (A),
(iii) deposition on the partly or totally coated mold obtained in (ii) of a coat of composition (B) comprising a thermoplastic resin or a thermoplastic resin mixture, and
(iv) heating of the mold to the point of gelling of composition B.

9. The process as claimed in claim 8, **characterized in that**, during step (i), printing nozzles with a diameter of less than or equal to 40 µm and preferably with a diameter of 30 µm or 20 µm are used to deposit the coat of composition (A).

10. The process as claimed in claim 8 or 9, **characterized in that** composition (A) used during step (i) comprises a polyvinyl chloride resin, and, during step (ii), the mold is heated to a temperature of between 180°C and 260°C and preferably between 230°C and 300°C.
